# EUROPEAN PATENT APPLICATION

(11) **EP 3 609 058 A1**
(43) Date of publication of application: **12.02.2020**
(21) Application number: 19190098.4
(22) Date of filing: 05.08.2019
(51) Int. Cl.: H02K 11/33, H02K 21/14

(54) **BRUSHLESS PERMANENT-MAGNET MOTOR**

(30) Priority: 08.08.2018 IT 201800003218 U
(71) Applicant: Electroil S.r.l., 42023 Cadelbosco di Sopra/Frazione Villa Argine RE (IT)
(72) Inventor: CHIUSSI, Federico, 42024 CASTELNOVO DI SOTTO RE (IT)
(74) Representative: Modiano, Micaela Nadia

(57) **Abstract**

A brushless permanent-magnet motor of the synchronous type (1), comprising a rotor (10) and a stator (20) which forms a plurality of recesses and coils wound in sectors, the stator being accommodated inside a casing (30) made of heat-conducting material, and comprising an integrated electronic board (50) for driving the motor which is supported directly by the motor, a power supply line connected to a battery storage device being provided.

## Description

The present invention relates to a brushless permanent-magnet motor.

In particular, said motor is of the type provided with integrated electronics for power supply from a 24V battery, for the actuation of high-pressure oil-pressure controlled pumps or air compressors or for the direct driving of belts or pulleys or racks on mobile vehicles and similar applications.

Currently, in mobile vehicles provided with cranes, baskets, tail lift, waste collection, etcetera, the loads are moved by using normally brushed direct-current motors, which have high switching losses on the commutator, wear of said brushes (need for frequent maintenance operations), and poor efficiency.

A few years ago, the first inverter-controlled asynchronous three-phase motors were introduced in mobile vehicles; this was unquestionably a significant step forward for the improvement of the efficiency and durability of motors, but had some limitations linked to the nature of the motor, particularly to slip (which is indeed normal in the asynchronous motor), which causes a reduction in efficiency at low frequencies.

Other solutions, used in residual applications, provide for the use of systems with a brushless motor and separate electronics, with the need to provide wiring between the drive and the motor (causing voltage drops) and between the encoder and the drive (complex wiring, with many wires and subject to electromagnetic noise).

The aim of the present invention is to provide a brushless permanent-magnet motor that is capable of improving the background art in one or more of the aspects indicated above.

Within the scope of this aim, an object of the invention is to provide a brushless permanent-magnet motor with high efficiency and with great wiring simplicity.

Another object of the invention is to provide a brushless permanent-magnet motor that is highly reliable, relatively easy to provide and at competitive costs.

This aim and these and other objects that will become better apparent hereinafter are achieved by a brushless permanent-magnet motor according to claim 1, optionally provided with one or more of the characteristics of the dependent claims.

Further characteristics and advantages of the invention will become better apparent from the description of a preferred but not exclusive embodiment of the brushless permanent-magnet motor according to the invention, illustrated by way of nonlimiting example in the accompanying drawings, wherein:

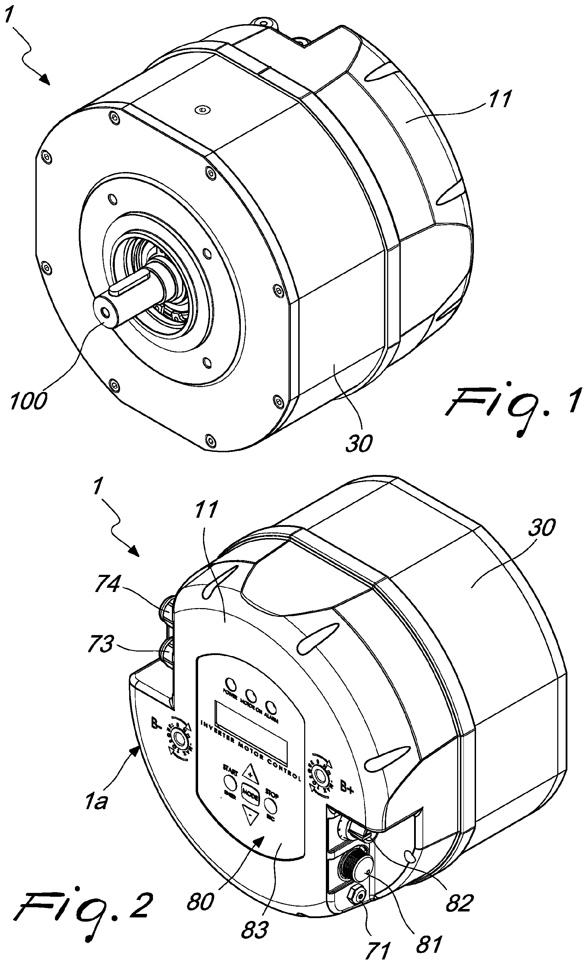

Figure 1 is a perspective view, taken from the shaft side, of a motor according to the invention;
Figure 2 is a perspective view, taken from the drive side, of a motor according to the invention;

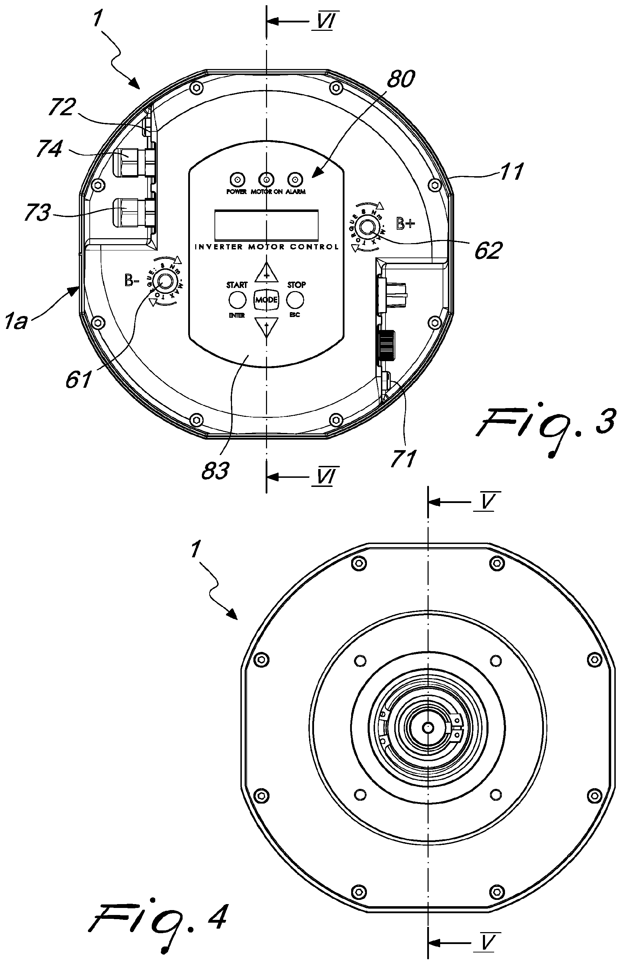

Figure 3 is a side view, taken from the drive side, of a motor according to the invention,
Figure 4 is a view, taken from the shaft side, of a motor according to the invention;

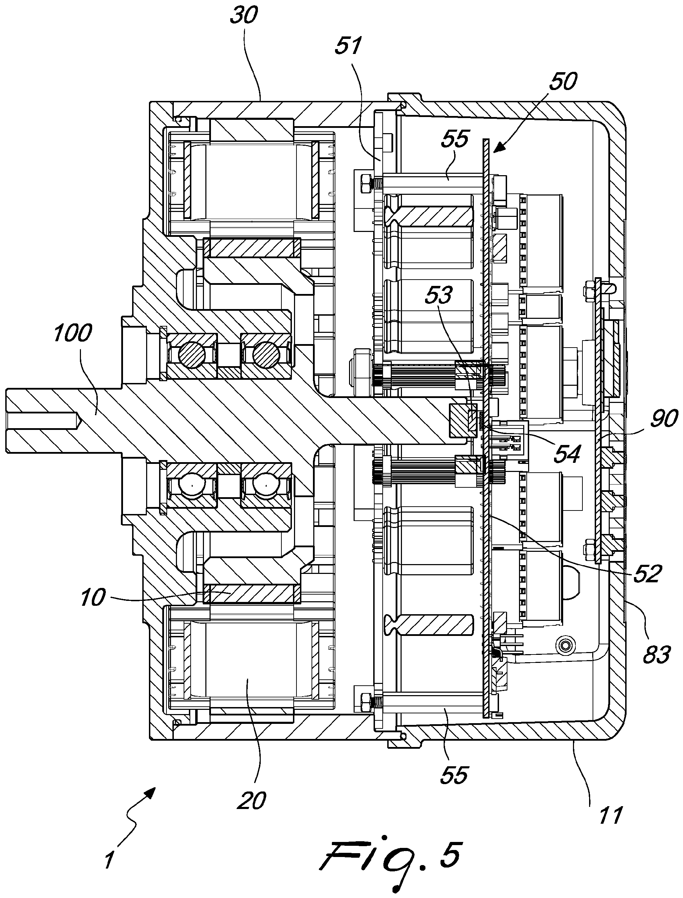

Figure 5 is a sectional view of the motor, taken along the plane of arrangement defined by the line V-V of Figure 4; and

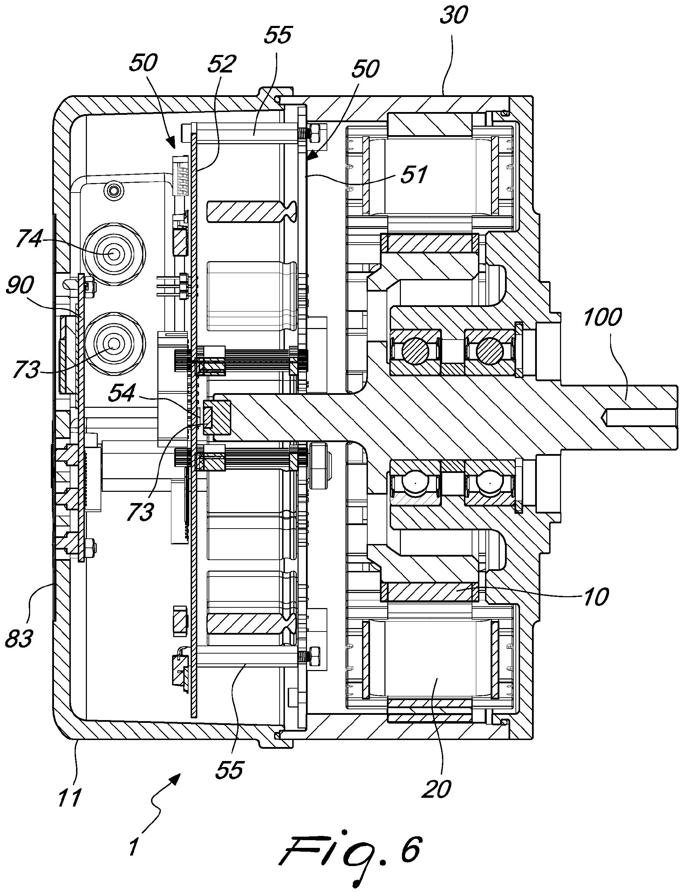

Figure 6 is a sectional view of the motor, taken along the plane of arrangement defined by the line VI-VI of Figure 3.

With reference to the figures, the brushless motor according to the invention, generally designated by the reference numeral 1, comprises a permanent-magnet motor of the synchronous type, which comprises a rotor 10 and a stator 20 which forms a plurality of recesses and of coils wound in sectors.

The stator 20 is accommodated inside a casing made of a heat-conducting material 30, typically aluminum.

According to the present invention, the brushless motor 1 comprises an integrated electronic board 50 for driving the motor 1.

The electronic board 50 is, in particular, supported directly by the motor 1.

Conveniently, there is a power supply line connected to a battery storage device.

Preferably, the motor 1 is provided with means for quick connection between the power supply line and the brushless motor.

Conveniently, the terminals of the electronic board 50 are connected stably on the terminals of the coils.

In particular, the electronic board 50 comprises a MOSFET power board with practically nil voltage drops in the connection to the stator winding.

Advantageously, the power board 51 is coupled on the casing made of heat-conducting material 30 of the stator 20 by means of a plurality of fixing screws.

The connection between the power board 51 and the casing made of heat-conducting material 30 is adapted to facilitate heat exchange between the power board 51 and the casing made of heat-conducting material 30.

In particular, the power board 51 is associated with two posts 61, 62 made of nickel-coated brass (or other electrically conducting material) which form the terminals for connection to the power supply line.

Said posts 61, 62 protrude from the head 1a of the motor 1, on the side of the cover, and are configured to form a seal on the thermoplastic covering housing 11 by means of O-Ring gaskets.

The power board 51 is functionally connected to a logic board 52 by means of a series of pins and mechanical fixing posts 55.

The logic board 52 comprises a microprocessor, a transceiver radio module and other integrated logic circuits and forms terminals for connection of the logic inputs/outputs.

According to one possible practical embodiment, it is possible to provide a shielding plate, conveniently compliant with EMC rules, interposed between the power board 51 and the logic board 52.

Conveniently, the shielding plate has one or more slots for the passage of the cooling air.

Advantageously, the logic board 52 is accommodated in the thermoplastic housing 11, which is made of electrically insulating material.

Preferably, at the thermoplastic covering housing 11 there is at least one venting plug with semipermeable membrane 71 made of impermeable material, which is adapted to allow the passage of air but not of water or dust and forms weakening regions for the optional perforation for cable glands 73, 74 for the entry/exit of cables for communication, feedback and control of the motor.

Advantageously, also at the thermoplastic covering housing 11, it is possible to provide a second plug with semipermeable membrane 72, which is adapted to allow the passage of air but not of water or dust and ensures the exchange of the air that enters/exits from the first plug 71.

The thermoplastic covering housing 11 and optionally the casing made of heat-conducting material 30 are provided with fins for cooling by natural or forced convection.

Conveniently, when the motor 1 acts as a brake, it is adapted to regenerate power by means of the drive, which recharges the storage means.

Preferably, a user interface with onboard display 80 is formed on the thermoplastic covering housing 11.

In this case, to the rear of the display 80 there is a driver board 90, functionally connected to the buttons of the display 80 and in turn associated with the logic board 52 for example by means of a flexible cable.

Preferably, the display 80 can be covered, toward the outside, by a protective film 83.

A user interface with onboard display 80 might also not be present on the thermoplastic covering housing 11.

In this case it is possible to provide analog or digital or serial remote control means.

In this regard, the motor 1 can be provided with a Wi-Fi data transmission device for wireless communication with devices, even of a commercial type, such as mobile phones or tablets, consequently allowing remote control of the motor 1 by means of dedicated applications.

The motor 1 comprises a shaft 100 which is integral with the rotor 10, which is in turn rotationally integral with a magnet 53 with diametrical magnetization.

In this manner it is possible to perform the angular position reading of the shaft 100 of the rotor by means of an integrated encoder 54 supported directly by the logic board 52, said encoder 54 facing the magnet 53 directly.

The covering housing made of thermoplastic material may be blind.

In this case, the user interface is entrusted to a keypad with a display, LEDs and buttons, with a radio (wireless) transceiver for remote communication with the driver board. This radio keypad is supplied separately and is not shown in the figures.

The thermoplastic covering housing 11 may also have means for fixing at least one fan for expelling the warm internal air and means for protection by means of a filter.

Optionally, it is possible to provide, next to the venting plug with semipermeable membrane 71, a potentiometer 81 for adjusting the speed of the motor and a selector 82 for controlling the direction of rotation of the shaft 100.

The motor 1 may also have a servo-ventilation assembly comprising one or more fans arranged inside the thermoplastic covering housing 11.

Conveniently, the servo-ventilation assembly furthermore has a protection filter, formed on the thermoplastic covering housing 11, which is adapted to allow the passage of air but adapted to prevent the entry of water and dirt.

It is possible to arrange externally to the protection filter a protective cover designed to protect the protection filter from water.

Furthermore, on the thermoplastic covering housing 11 and/or on the casing made of heat-conducting material 30 it is possible to provide one or more holes with air extraction plug, associated with semipermeable membranes, designed to allow the entry of air but not of water and dirt.

Inside the motor it is possible to provide crossing channels for the air that enters through the holes to flow over the power board 51 and the logic board 52 and then be expelled by the fans.

The operation of a motor according to the invention is evident from what has been described above.

Said motor finds application in a wide variety of machines powered by a 24V DC battery, such as mobile vehicles equipped with cranes, baskets, tail lift, waste collection, lift trucks, electric transpallets, for the direct driving of wheels, high-pressure oil-pressure controlled pumps or air compressors or for the direct movement of belts or pulleys or racks.

In particular, said motor is a considerable evolution of traditional (brushed) direct-current motors, maintaining the same installation and wiring simplicity, but with an enormously increased possibility of control, by virtue of the integrated electronic drive, the parameters of which can be set by the customer, and with an efficiency close to 95%, not comparable with the efficiency of ordinary direct-current and AC motors normally used for the same applications.

This efficiency leads to a considerable advantage in terms of maintaining the charge of vehicle batteries and reduction in the space occupation and weights thereof.

In practice it has been found that the invention achieves the intended aim and objects.

The invention thus conceived is susceptible of numerous modifications and variations, all of which are within the scope of the accompanying claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Utility Model Application no. 202018000003218, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A brushless permanent-magnet motor of the synchronous type (1), comprising a rotor (10) and a stator (20) which forms a plurality of recesses and coils wound in sectors, said stator being accommodated inside a casing (30) made of heat-conducting material, **characterized in that** it comprises an integrated electronic board (50) for driving said motor supported directly by the casing (30) made of heat-conducting material, a power supply line connected to a battery storage device being provided.

2. The brushless motor according to claim 1, **characterized in that** it comprises means for quick connection between said power supply line and said brushless motor.

3. The brushless motor according to one or more of the preceding claims, **characterized in that** the terminals of said electronic board (50) are connected stably on the terminals of said coils.

4. The brushless motor according to one or more of the preceding claims, **characterized in that** said electronic board (50) comprises a MOSFET power board (51).

5. The brushless motor according to one or more of the preceding claims, **characterized in that** said power board (51) is coupled on the casing (30) made of heat-conducting material of said stator (20) by means of a plurality of fixing screws.

6. The brushless motor according to one or more of the preceding claims, **characterized in that** the connection between said power board (51) and said casing (30) made of heat-conducting material is adapted to facilitate heat exchange between said power board and said casing (30) made of heat-conducting material.

7. The brushless motor according to one or more of the preceding claims, **characterized in that** said power board (51) is associated with two posts made of nickel-coated brass (61, 62) or other electrically conducting material which form said terminals for connection to said power supply line.

8. The brushless motor according to one or more of the preceding claims, **characterized in that** said posts (61, 62) protrude from the heads of said motor in order to provide a seal on a thermoplastic covering housing (11) by virtue of O-Ring gaskets.

9. The brushless motor according to one or more of the preceding claims, **characterized in that** said power board (51) is functionally connected to a logic board (52) by means of a series of pins and posts for mechanical fixing (55).

10. The brushless motor according to one or more of the preceding claims, **characterized in that** said logic board (52) comprises a microprocessor, a radio transceiver module and other logic integrated circuits and forms terminals for the connection of the logic inputs/outputs.

11. The brushless motor according to one or more of the preceding claims, **characterized in that** a driver board (90) is accommodated in said casing (30) made of heat-conducting material, at least one venting plug (71) made of semipermeable material being provided at said thermoplastic covering housing (11) and being adapted to allow the venting of the internal hot air but not of water or dust, and forming weakening regions for optional perforation for cable glands (73, 74) for the entry/exit of cables for communication, feedback and control of the motor.

12. The brushless motor according to one or more of the preceding claims, **characterized in that** it can comprise at least one second plug with semipermeable membrane (72) adapted to allow the exchange of the air that enters/exits from the similar first plug, preventing the passage of water or dust.

13. The brushless motor according to one or more of the preceding claims, **characterized in that** said motor, when it acts as a brake, is adapted to regenerate power by means of the drive, which recharges said storage means.

14. The brushless motor according to one or more of the preceding claims, **characterized in that** said thermoplastic covering housing (11) has a user interface with onboard display (80).

15. The brushless motor according to one or more of the preceding claims, **characterized in that** said cover is provided with means for fixing an air expulsion fan.

16. The brushless motor according to one or more of the preceding claims, **characterized in that** it comprises a shaft (100) which is integral with the rotor (10) and rotationally integral with a magnet (53), said logic board (52) supporting an encoder (54) which faces said magnet (53) to read the angular position of said shaft (100).

17. The brushless motor according to one or more of the preceding claims, **characterized in that** said thermoplastic housing (11) for covering the drive is blind and user control is performed by means of a keypad which communicates with the drive by means of a radio transceiver.

18. The brushless motor according to one or more of the preceding claims, **characterized in that** the integrated drive can be controlled by means of wired remote commands or a wired serial communication bus which can be configured according to numerous protocols, which exit from adapted cable glands.

19. The brushless motor according to one or more of the preceding claims, **characterized in that** the integrated drive can be controlled by means of a selector (82) of the direction of rotation and a potentiometer (81) for motor speed adjustment, which are fixed on the housing (11).
